# EUROPEAN PATENT APPLICATION

(11) **EP 3 498 510 A1**
(43) Date of publication of application: **19.06.2019**
(21) Application number: 18211981.8
(22) Date of filing: 12.12.2018
(51) Int. Cl.: B60J 5/10, E05C 19/02, E05B 83/28, B60J 7/10, B62D 25/10

(54) **A TRUNK LID HAVING AN AUXILIARY LID**

(30) Priority: 18.12.2017 TR 201720596
(71) Applicant: Ford Otomotiv Sanayi Anonim Sirketi, 34885 Sancaktepe/Istanbul (TR)
(72) Inventor: AKDAG, Husniye, KOCAELI (TR); YILDIRIM, Mustafa Kemal, KOCAELI (TR); KARAGOZ, Zekai, KOCAELI (TR); BOZTEPE, Ercan, KOCAELI (TR)
(74) Representative: Dericioglu, E. Korhan

(57) **Abstract**

The present invention relates to a trunk lid (1) having an auxiliary lid, which, by opening and closing the auxiliary lid (4) independent from the body (2) by means of the locking mechanism (7), enables to access the luggage storage area in cases where the vehicle is located at a confined space.

## Description

### Field of the Invention

The present invention relates to a trunk lid having an auxiliary lid which is provided in the rear luggage storage area of the vehicles and used for carrying objects or different materials, and which allows use in confined spaces.

### Background of the Invention

A luggage compartment for carrying objects is provided in all passenger vehicles and light or heavy commercial vehicles manufactured in the automotive industry. Luggage compartments are used for storing or transporting objects. Trunk lids enabled to close the luggage compartments. Vehicle trunk lids are of the moving parts of the body. The moving parts are attached to the body via screws and nuts. Automobile trunk lids enable the objects that are to be placed in the vehicle to be conveniently loaded and unloaded by means of their sizes and full opening angles. The opening and closing of the trunk lids is controlled by a trunk locking mechanism. Currently, the trunk lid should also be opened for items of small size. On the other hand, completely opening the trunk lid of a vehicle, which is located in a confined area, causes damages. In this case, the user must move the entire body of the vehicle in order to use the luggage compartment. Users who do not prefer to move the vehicle completely store the objects inside the vehicle instead of putting them in the trunk. The objects stored inside the vehicle cause problems during driving due to falling on the floor or hitting the user.

The trunk lids used in the current system are of a single piece. In this case, if the vehicle is located in a confined area, it is not possible to open the trunk lid without moving the vehicle body. The present invention enables to use the storage area by means of the auxiliary lid provided on the trunk lid without having to move the vehicles located in confined spaces.

The Korean patent document no. KR20020044972A with a priority date of 07.12.2000, an application in the state of the art, discloses a double folding luggage compartment. The trunk lid in the said document enables to load and unload cargo into the luggage compartment in a limited space. The double folding trunk lid includes a lid panel fixed to the vehicle floor through a turning unit, a glass having the lower part folded by a folding unit and a locking unit. The folding glass is folded in the lid panel with turning a hinge arm around a turning pin. Cargo is loaded and unloaded in the limited space in the luggage compartment by means of the folding lid panel. The said invention has a folding luggage compartment but does not have a single piece trunk lid. The auxiliary lid provided in the present invention is integrated with the single piece trunk lid. The auxiliary lid is connected to the trunk lid by means of the hinges. The auxiliary lid provided in the present invention can be opened from the top or bottom. The said auxiliary lid is operated by means of a push-pin locking mechanism connected to the central locking system. The said locking mechanism enables the auxiliary lid to be opened and closed from the trunk lid.

The Korean patent document no. KR20020044977A with a priority date of 07.12.2000, an application in the state of the art, discloses a double folding luggage compartment. The trunk lid in the said document enables to load and unload cargo into the luggage compartment in a limited space. The double folding trunk lid includes a lid panel fixed to the vehicle floor through a turning unit, a glass having the lower part folded by a folding unit and a locking unit. The folding glass is folded in the lid panel with turning a hinge arm around a turning pin. The end of a hook is inserted into a lock housing by compressing a spring. Thus the lid panel is closed. The loading compartment is opened by pushing the lid panel into the vehicle. Large cargo can be stored even in a limited space. The said invention only discloses a folding trunk lid. The said invention does not disclose an auxiliary lid incorporated to the trunk lid. The auxiliary lid provided in the present invention is integrated with the single piece trunk lid. The auxiliary lid is connected to the trunk lid by means of the hinges. The auxiliary lid provided in the present invention can be opened from the top or bottom. The said auxiliary lid is operated by means of a push-pin locking mechanism connected to the central locking system. The said locking mechanism enables the auxiliary lid to be opened and closed from the trunk lid.

The International patent document no. WO2005002894A1 with a priority date of 02.07.2003, an application in the state of the art, discloses a luggage compartment. The luggage compartment in the said invention includes a rear window that can be displaced to reveal a first luggage compartment. A second luggage compartment is revealed when the hatchback lid is displaced. The said invention comprises a single trunk lid and discloses an auxiliary lid used when the said trunk lid is disassembled. An extra luggage space is provided to the user when the said glass compartment is opened. The auxiliary lid provided in the present invention is integrated with the single piece trunk lid. The auxiliary lid is connected to the trunk lid by means of the hinges. The auxiliary lid provided in the present invention can be opened from the top or bottom. The said auxiliary lid is operated by means of a push-pin locking mechanism connected to the central locking system. The said locking mechanism enables the auxiliary lid to be opened and closed from the trunk lid.

The extra compartment auxiliary lid of the present invention is connected to the trunk body in such a way that it can be opened and closed by a moveable shaft or piston mechanism. The auxiliary lid can be opened and closed by the help of the hinge by which it is fixed on the trunk body. By means of the push-pin locking mechanism of the present invention, which is operated in connection with the central locking system of the vehicle, the inventive auxiliary lid can be opened and closed independent from the trunk lid.

There are no explanations in the state of the art pertaining to the technical features of the present invention and technical effects provided by the present invention. In the current applications, there is no auxiliary luggage compartment lid, which can be connected to the trunk body by means of hinges and is enabled to be opened and closed with the help of a movable shaft or piston, and which can be controlled by means of a push-pin locking mechanism connected to the vehicle's central locking system.

### Objectives of the Invention

The objective of the present invention is to provide a trunk lid having an auxiliary lid which allows the vehicle user to load small sized objects to the luggage compartment without having to lift the entire trunk lid.

Another objective of the present invention is to provide a trunk lid having an auxiliary lid which enables the storage area to be used as required due to the fact that it is not integral with the trunk body.

A further objective of the present invention is to provide a trunk lid having an auxiliary lid which eliminates the problems of the pressure and noise resulting upon closing the trunk lids that are produced as a single piece.

Another objective of the present invention is to provide a trunk lid having an auxiliary lid which minimizes the ergonomic difficulty experienced by the user when opening/closing the single-piece trunk lids.

### Summary of the Invention

The trunk lid having an auxiliary lid; which is developed to fulfill the objectives of the present invention, and which is defined in the first claim and the claims dependent thereon; comprises a body, a slot, an auxiliary lid, a sealing member, a hinge, a locking mechanism and a retention rope. The auxiliary lid is placed over the slot provided on the body of the trunk lid. Before the auxiliary lid is placed, the sealing member is fitted around the lid body. The sealing member is disposed around the circumference of the lid body. Then, the auxiliary lid is fitted on the slot provided on the body from one end thereof by means of hinges. The auxiliary lids are mounted so that one end of the hinges is fixed to the body and the other end to the auxiliary lid. There are two locking mechanisms on the other edge of the auxiliary lid, to which a hinge is not connected. At the same time, the auxiliary lid is connected to the body by means of the retention rope from the edge thereof where the locking mechanism is located. The locking mechanism enables to lock the auxiliary lid on the body or to open it. When the auxiliary lid is preferred to be opened, the main lock is activated with the central locking system and moves out of the lock housing. After the main lock moves out of the lock housing, a force is applied on the release button. The force applied on the release button compresses the resilient member thereby enabling it to store energy. The resilient member, which has stored energy, applies pushing force on the release button, and thus enables the release button to move out of the lock housing. When the release button comes out of the lock housing, the auxiliary lid (4) is opened. When reverse operation is performed, the release button goes into the lock housing and thus enables the auxiliary lid to be closed. The release button is inserted into the lock housing by fitting the auxiliary lid on the slot by applying force thereon.

### Detailed Description of the Invention

The trunk lid having an auxiliary lid developed to fulfill the objectives of the present invention is illustrated in the accompanying figures, in which,
- **Figure 1**: is a perspective view of the closed state of the trunk lid having an auxiliary lid on the vehicle.
- **Figure 2**: is a perspective view of the open state of the trunk lid having an auxiliary lid on the vehicle.
- **Figure 3**: is a perspective view of the auxiliary lid.
- **Figure 4**: is an enlarged view of the hinge provided on the auxiliary lid.
- **Figure 5**: is an enlarged view of the locking mechanism provided on the auxiliary lid.
- **Figure 6**: is a perspective view of the open state of the auxiliary lid.
- **Figure 7**: is an exploded view of the auxiliary lid.
- **Figure 8**: is a sectional view of the passive state of the locking mechanism.
- **Figure 9**: is a sectional view of the active state of the locking mechanism.
- **Figure 10**: is a sectional view of the locking mechanism when it is activated upon pushing the button on the central locking system.
- **Figure 11**: is a sectional view of the state of the locking mechanism when it is opened upon exerting force on the release button.

The components shown in the figures are given reference numbers as follows:
- **1.**: Trunk lid
- **2.**: Body
- **3.**: Slot
- **4.**: Auxiliary lid
**4.1.** Lid body
**4.2.** Lock latch
- **5.**: Sealing member
- **6.**: Hinge
**6.1.** Upper part
**6.2.** Lower part
**6.3.** Pin
- **7.**: Locking mechanism
**7.1.** Main lock
**7.2.** Release button
**7.3.** Lock housing
**7.4.** Resilient member
**7.5.** Limiting member
- **8.**: Retention rope

The trunk lid (1), which is provided in the rear luggage storage area of the vehicles and used for carrying objects or different materials, and which allows use in confined spaces, essentially comprises
- at least one body (2) which creates a closed area by covering the rear luggage storage area of the vehicle and which is used by being opened and closed,
- at least one slot (3) which is located on the body (2) and opens to the rear luggage storage area of the vehicle,
- at least one auxiliary lid (4) which is fitted over the slot (3), opened and closed upon being connected to the body (2), and used by being opened and closed independent from the body (2),
- at least one hinge (6) which enables the auxiliary lid (4) to be coupled to the body (2), and which allows the auxiliary lid (4) coupled to the body (2) to perform opening and closing movements with respect to the body (2),
- at least one locking mechanism (7), which has at least one main lock (7.1) and at least one release button (7.2), and which
   - enables the auxiliary lid (4) to be opened and closed,
   - enables to activate the main lock (7.1) upon opening of the body (2) by means of the central locking system,
   - performs opening and closing operation of the auxiliary lid (4) once the main lock (7.1) is activated,
   - enables the auxiliary lid (4) to be detached from the body (2) and be opened as a result of the force applied on the release button (7.2).

The trunk lid (1) of the present application is used to cover the rear luggage storage area where objects are stored or transported. The trunk lid (1) ensures that the objects are placed into the luggage storage area without moving the vehicle which is located at a confined space. The trunk lid (1) comprises a body (2), slot (3), the auxiliary lid (4), sealing member (5), hinge (6), locking mechanism (7) and retention rope (8).

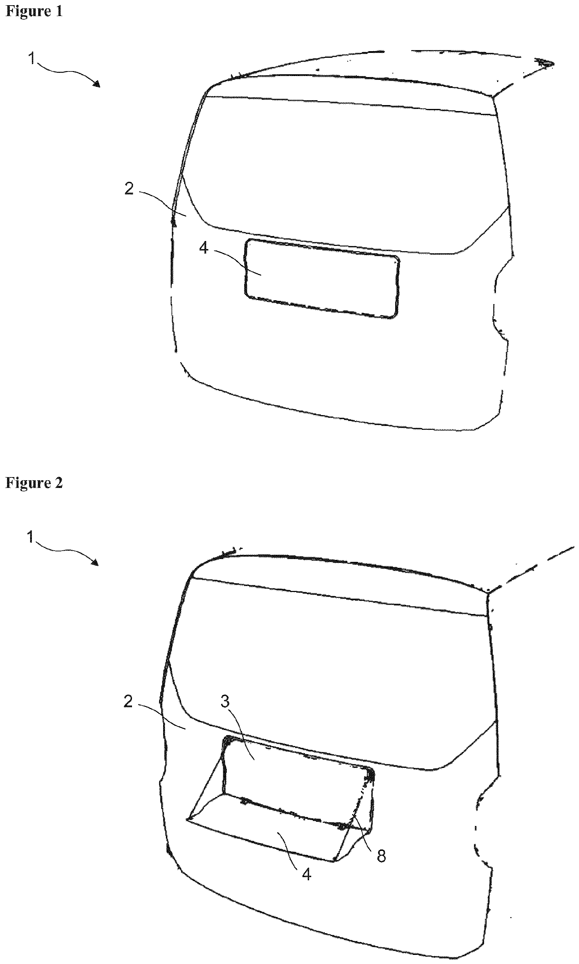

In one embodiment of the present invention, the body (2) in the trunk lid (1) covers the rear luggage storage area of the vehicle thereby forming a closed space. The body (2) is used by being opened and closed. The body (2) is connected to the vehicle from one side thereof. The rear luggage storage area can be used upon opening and closing of the body (2) (Figure 1). A slot (3) is provided on the body (2). The slot (3) opens to the rear luggage storage area of the vehicle. The slot (3) can be in the preferred geometric form on the body (2). In this embodiment of the invention, the slot (3) preferably has a rectangular geometric form. The slot (3) can be provided on the body (2) at a preferred position and direction (Figure 2). The width of the slot (3) can be adjusted according to the user preference.

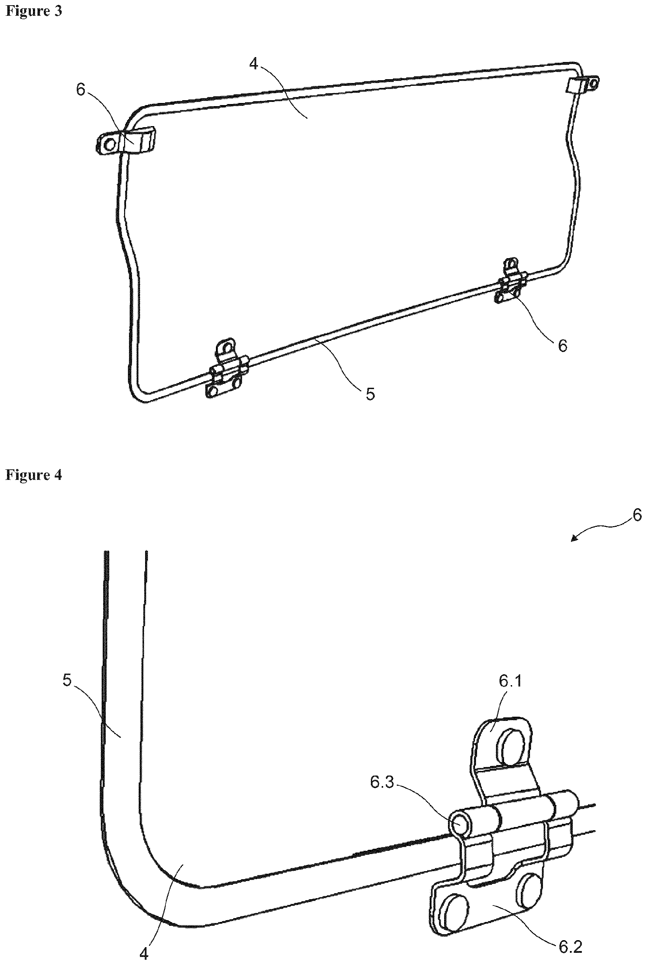

In one embodiment of the invention, the auxiliary lid (4) provided on the trunk lid (1) is fitted over slot (3). The auxiliary lid (4) is opened and closed upon being connected to the body (2). The auxiliary lid (4) is used by being opened and closed independent from the body (2). The auxiliary lid (4) is preferably in the form of a rectangular panel. The auxiliary lid (4) has similar geometric dimensions with the slot (3). The auxiliary lid (4) covers the slot (3). The auxiliary lid (4) is preferably connected to the body (2) from one of its long sides. The auxiliary lid (4) comprises a lid body (4.1) and a lock latch (4.2) (Figure 3). The auxiliary lid (4) is comprised of a lid body (4.1) and includes a lock latch (4.2) thereon. The lid body (4.1) can be in different geometric forms. In this embodiment of the invention, the lid body (4.1) has a rectangular geometric form. The lock latch (4.2) is preferably in a circular geometric form, and is located on the edge of the lid body (4.1) that is not connected to the body (2). The lock latch (4.2) is positioned at both corners of the edge of the lid body (4.1) that is not connected to the body (2). The auxiliary lid (4) is connected to the body (2) by means of hinges (6). The auxiliary lid (4) is opened and closed by the locking mechanism (7).

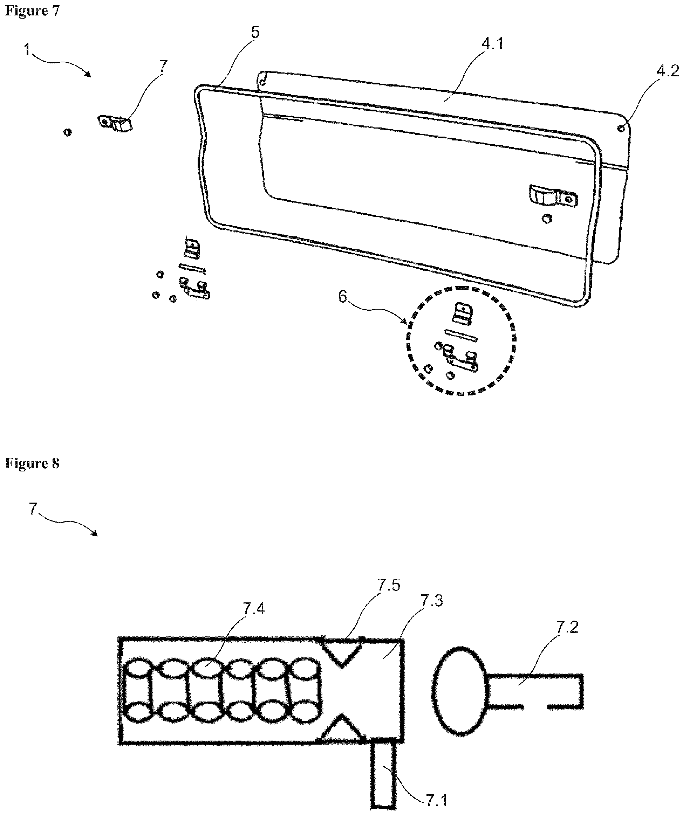

In one embodiment of the invention, the sealing member (5) provided on the trunk lid (1) is positioned to surround the lid body (4.1) of the auxiliary lid (4) (Figure 7). The sealing member (5) is preferably produced from a material that can undergo elastic deformation. In this embodiment of the invention, the sealing member (5) is preferably rubber. The sealing member (5) is arranged to surround the entire circumference of the lid body (4.1). The sealing member (5) prevents external factors from entering the luggage storage area through the auxiliary lid (4). The sealing member (5) prevents the vibrations that might occur in the auxiliary lid (4) due to the oscillations that occur during driving.

In one embodiment of the invention, the hinge (6) provided on the trunk lid (1) enables the auxiliary lid (4) to be connected to the body (2). The hinge (6) allows the auxiliary lid (4) connected to the body (2) to open and close relative to the body (2). The hinge (6) is placed on the edge of the auxiliary lid (4) that will be connected to the body (2). The hinge (6) enables the auxiliary lid (4) to make an angular movement relative to the body (2) with its edge that is connected to the body (2). The hinge (6) consists of the upper part (6.1), the lower part (6.2) and the pin (6.3) (Figure 4). The hinge (6) is connected from its upper part (6.1) to the lid body (4.1) of the auxiliary lid (3). The hinge (6) is connected from its lower part (6.2) to the body (2). The upper part (6.1) and the lower part (6.2) of the hinge (6) are connected and the pin (6.3) is inserted through them. The pin (6.3) preferably has a cylindrical geometric form. The angular movement of the upper part (6.1) and the lower part (6.2) of the hinge (6) relative to each other is enabled by the pin (6.3). The pin (6.3), which is fitted into the upper part (6.1) and the lower part (6.2), can make a rotational movement around the central axis within the upper part (6.1) and the lower part (6.2). In this case, the lower part (6.2) is connected to the body (2) and remains in fixed position. The upper part (6.1) connected to the auxiliary lid (4) allows the auxiliary lid (4) to move on the body (2).

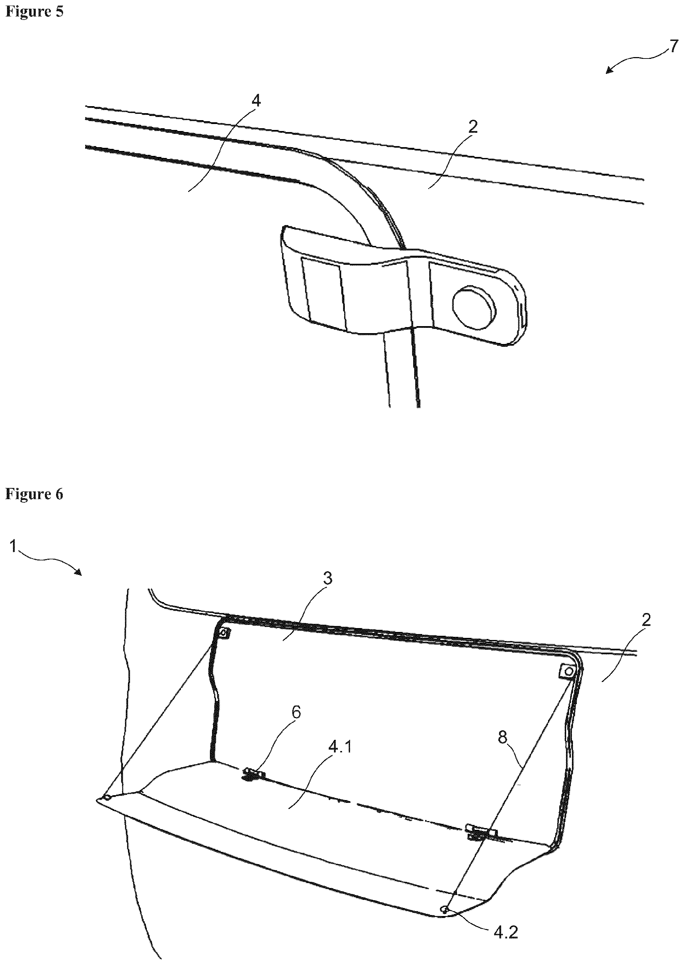

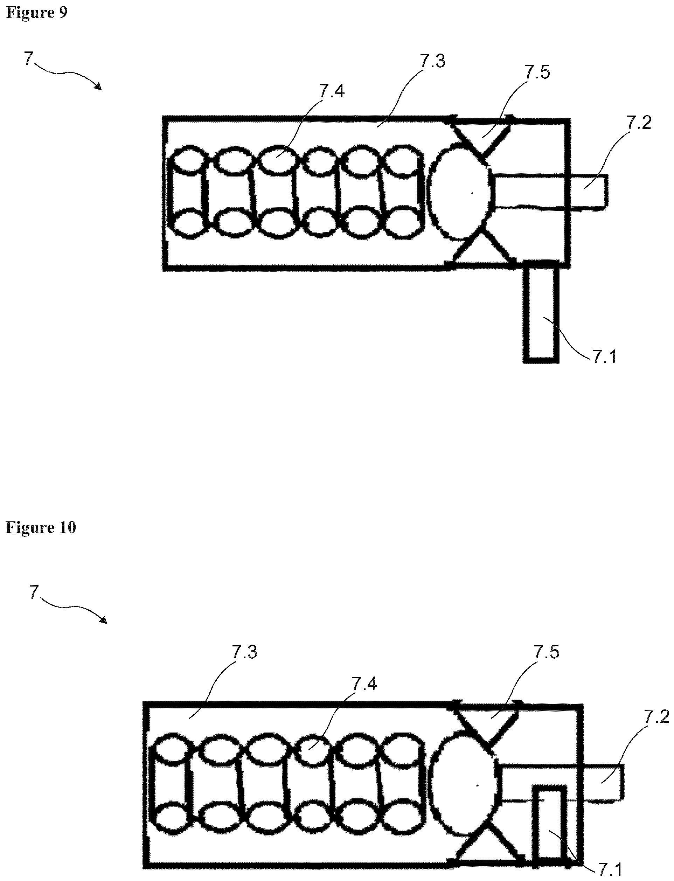

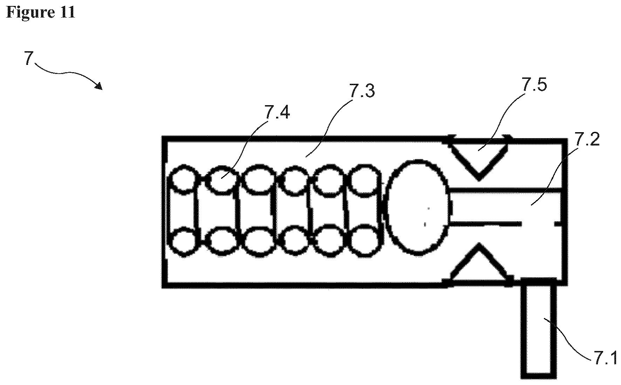

In one embodiment of the invention, the locking mechanism (7) provided on the trunk lid (1) enables the auxiliary lid (4) to be opened and closed (Figure 5). The locking mechanism (7) is preferably placed to the edge opposite to the edge where the auxiliary lid (4) is connected to the body (2) by the hinge (6). The locking mechanism (7) is arranged in the position of the lock latch (4.2) provided on the auxiliary lid (4). The locking mechanism (7) comprises the main lock (7.1), release button (7.2), lock housing (7.3), the resilient member (7.4) and limiting member (7.5) (Figure 8). The main lock (7.1) preferably has a cylindrical geometric form. In the locking mechanism (7), the main lock (7.1) is positioned outside the lock housing (7.3). The main lock (7.1) is operated together with the central locking system, which enables the body (2) to be opened and closed. When the central locking system is activated, the main lock (7.1) is brought to open position. When the main lock (7.1) is in closed position, it is located in the lock housing (7.3). When the main lock (7.1) is brought to open position, it is moved out of the lock housing (7.3) with a linear movement. The locking mechanism (7) enables to activate the main lock (7.1) when the body (2) is opened by means of the central locking system. The locking mechanism (7) performs opening and closing operation of the auxiliary lid (4) once the main lock (7.1) is activated. The locking mechanism (7) enables the auxiliary lid (4) to be detached from the body (2) and be opened as a result of the force applied on the release button (7.2). The release button (7.2) preferably has a cylindrical geometric form and has a spherical structure on one end thereof. The release button (7.2) is preferably produced from a material that can undergo elastic deformation. Normally, the release button (7.2) is positioned such that its spherical part is in the lock housing (7.3) and its cylindrical part is outside the lock housing (7.3). The lock housing (7.3) preferably has a cylindrical geometric form and is hollow. A resilient member (7.4) is provided in the lock housing (7.3). When force is applied on the resilient member (7.4), it collects the applied force and stores energy. In this embodiment of the invention, a spring is used as the resilient member (7.4). There are limiting members (7.5) in the lock housing (7.3) connected to the cylindrical surfaces thereof. The limiting member (7.5) is preferably of a conical geometric form and is produced from a material that can undergo elastic deformation. The resilient member (7.4) is placed in the lock housing (7.3) such that one end thereof contacts the lower end of the lock housing (7.3). There are preferably two limiting members (7.5) in the lock housing (7.3). The limiting members (7.5) are preferably located in the lock housing (7.3) at a position near the end of the resilient member (7.4) that does not contact the lock housing (7.3). When force is applied on them, the limiting members (7.5) enable the release button (7.2) to go out of the lock housing (7.3). The release button (7.2) is normally placed such that its spherical part is on the side of the limiting members (7.5) facing the resilient member (7.4). When a pushing force is preferred to be applied to the release button (7.2) from the cylindrical end thereof, the release button (7.2) transmits the pushing force from its spherical end to the resilient member (7.4). The resilient member (7.4) enables the auxiliary lid (4) to be opened with the force applied on the release button (7.2). Under the influence of the pushing force applied on it, the resilient member (7.4) is compressed in the lock housing (7.3). At the end of the compression movement, the compressed resilient member (7.4) is directed towards the release button (7.2) in the opposite direction to transmit the force thereto (Figure 11). Under the influence of the transmitted force, the resilient member (7.4) forces the release button (7.4) to move to the other side of the limiting members (7.5) by exerting force on the release button (7.2) in the opposite direction. In this case, when the release button (7.2) is released from the limiting members (7.5), the auxiliary lid (4) is opened (Figure 8). The auxiliary lid (4) is in the closed position when the release button (7.2) is in the lock housing (7.3). In the case that the body (2) is locked by the central locking system, when the release button (7.2) is in the lock housing (7.3), release thereof is prevented by the main lock (7.1) (Figure 10).

In one embodiment of the invention, the retention rope (8) provided on the trunk lid (1) enables connection of the auxiliary lid (4) to the body (2) after it is detached from the body (2) and opened. The retention rope (8) is connected to the slot (3) via the lock latch (4.2) from the two ends of the auxiliary lid (4) that are not connected to the body (2). The auxiliary lid (4) is prevented from being completely disconnected from the body (2) by means of the retention rope (8).

Mounting and use of the trunk lid (1) provided in this embodiment of the invention is carried out as follows. The auxiliary lid (4) is placed over the slot (3) provided on the body (2) of the trunk lid (1). Before the auxiliary lid (4) is placed, the sealing member (5) is fitted around the lid body (4.1). The sealing member (5) is disposed around the circumference of the lid body (4.1). Then, the auxiliary lid (4) is fitted on the slot (3) provided on the body (2) from one end thereof by means of hinges (6). The auxiliary lids (4) are mounted so that one end of the hinges (6) is fixed to the body (2) and the other end to the auxiliary lid (4). There are two locking mechanisms (7) on the other edge of the auxiliary lid (4), to which a hinge (6) is not connected. At the same time, the auxiliary lid (4) is connected to the body (2) by means of the retention rope (8) from the edge thereof where the locking mechanism (7) is located. The locking mechanism (7) enables locking the auxiliary lid (4) on the body (2) or opening thereof. When the auxiliary lid (4) is preferred to be opened, the main lock (7.1) is activated with the central locking system and moves out of the lock housing (7.3). After the main lock (7.1) moves out of the lock housing (7.3), a force is applied on the release button (7.2). The force applied on the release button (7.2) compresses the resilient member (7.4) thereby enabling it to store energy. The resilient member (7.4), which has stored energy, applies pushing force on the release button (7.2), and thus enables the release button (7.2) to move out of the lock housing (7.3). When the release button (7.2) comes out of the lock housing (7.3), the auxiliary lid (4) is opened. When reverse operation is performed, the release button (7.2) goes into the lock housing (7.3) and thus enables the auxiliary lid (4) to be closed. The release button (7.2) is inserted into the lock housing (7.3) by fitting the auxiliary lid (4) on the slot (3) by applying force thereon.

By means of the trunk lid (1) of the present invention, the auxiliary lid (4) is opened and closed independently from the body (2) by means of the locking mechanism (7) thereby enabling to access the luggage storage area in cases where the vehicle is located at a confined space.

## Claims

1. A trunk lid (1), which is provided in the rear luggage storage area of the vehicles and used for transporting objects or different materials, and which allows use in confined spaces, essentially **comprising**
- at least one body (2) which creates a closed area by covering the rear luggage storage area of the vehicle and which is used by being opened and closed,
- at least one slot (3) which is located on the body (2) and opens to the rear luggage storage area of the vehicle, and **characterized by**
- at least one auxiliary lid (4) which is fitted over the slot (3), opened and closed upon being connected to the body (2), and used by being opened and closed independent from the body (2),
- at least one hinge (6), which enables the auxiliary lid (4) to be coupled to the body (2), and which allows the auxiliary lid (4) coupled to the body (2) to perform opening and closing movements relative to the body (2),
- at least one locking mechanism (7), which has at least one main lock (7.1) and at least one release button (7.2), and which
• enables the auxiliary lid (4) to be opened and closed,
• enables to activate the main lock (7.1) upon opening of the body (2) by means of the central locking system,
• performs opening and closing operation of the auxiliary lid (4) once the main lock (7.1) is activated,
• enables the auxiliary lid (4) to be detached from the body (2) and be opened as a result of the force applied on the release button (7.2).

2. Trunk lid (1) according to Claim 1, **characterized by** the auxiliary lid (4), which comprises a lid body (4.1) and a lock latch (4.2) that enables it to be closed on the body (2) and which covers the slot (3).

3. Trunk lid (1) according to Claim 1, **characterized by** the sealing member (5) which is positioned to surround the lid body (4.1) of the auxiliary lid (4), and which prevents external factors from entering the luggage storage area through the auxiliary lid (4) and the vibrations that might occur in the auxiliary lid (4) due to the oscillations that occur during driving.

4. Trunk lid (1) according to Claim 1, **characterized by** the hinge (6), which consists of the upper part (6.1), the lower part (6.2) and the pin (6.3); is placed on the edge of the auxiliary lid (4) that will be connected to the body (2); and enables the auxiliary lid (4) to make an angular movement relative to the body (2) with its edge that is connected to the body (2).

5. Trunk lid (1) according to Claim 1, **characterized by** the locking mechanism (7) which comprises a lock housing (7.3), a resilient member (7.4) and a limiting member (7.5).

6. Trunk lid (1) according to Claim 5, **characterized by** the main lock (7.1), which is positioned outside the lock housing (7.3) in the locking mechanism (7) and located in the lock housing (7.3) when it is in closed position, and which is operated together with the central locking system that enables the body (2) to be opened and closed.

7. Trunk lid (1) according to Claim 5, **characterized by** the main lock (7.1), which, when in open position, is moved out of the lock housing (7.3) with a linear movement, and is activated when the body (2) is opened by means of the central locking system.

8. Trunk lid (1) according to Claim 5, **characterized by** the release button (7.2) which has a cylindrical geometric form and a spherical structure on one end thereof, and which is positioned such that its spherical part is in the lock housing (7.3) and its cylindrical part is outside the lock housing (7.3), and enables the auxiliary lid (4) to be detached from the body (2) and be opened as a result of the force applied thereon.

9. Trunk lid (1) according to Claim 5, **characterized by** the resilient member (7.4), which is provided in the lock housing (7.3), and which, when force is applied thereon, collects the applied force and stores energy, and enables the auxiliary lid (4) to be opened with the force applied on the release button (7.2).

10. Trunk lid (1) according to Claim 5, **characterized by** the limiting member (7.5), which is provided in the lock housing (7.3) connected to the cylindrical surfaces thereof, is produced from a material that can undergo elastic deformation, is located in the lock housing (7.3) at a position near the end of the resilient member (7.4) that does not contact the lock housing (7.3), and when force is applied thereon, enables the release button (7.2) to go out of the lock housing (7.3).
